(19) Europäisches Patentamt
European Patent Office
Office européen des brevets

(11) **EP 3 439 834 B1**

(12) **EUROPÄISCHE PATENTSCHRIFT**

(45) Veröffentlichungstag und Bekanntmachung des Hinweises auf die Patenterteilung:
**13.10.2021   Patentblatt 2021/41**

(21) Anmeldenummer: **17719505.4**

(22) Anmeldetag: **06.04.2017**

(51) Int Cl.:
**B25J 9/16** *(2006.01)*      **E04G 21/04** *(2006.01)*

(86) Internationale Anmeldenummer:
**PCT/EP2017/058235**

(87) Internationale Veröffentlichungsnummer:
**WO 2017/174714 (12.10.2017 Gazette 2017/41)**

(54) **KARTESISCHE STEUERUNG EINER MASTSPITZE EINES GROSSMANIPULATORS, INSBESONDERE BETONPUMPE**

CARTESIAN CONTROL OF A BOOM TIP OF A LARGE MANIPULATOR, IN PARTICULAR A CONCRETE PUMP

COMMANDE CARTÉSIENNE D'UNE POINTE DE MÂT D'UN MANIPULATEUR DE GRANDE DIMENSION, EN PARTICULIER UNE POMPE À BÉTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2016   DE 102016106406**

(43) Veröffentlichungstag der Anmeldung:
**13.02.2019   Patentblatt 2019/07**

(73) Patentinhaber: **Schwing GmbH**
**44653 Herne (DE)**

(72) Erfinder:
• **HENIKL, Johannes**
  **46282 Dorsten (DE)**
• **VIERKOTTEN, Reiner**
  **46145 Oberhausen (DE)**

(74) Vertreter: **Schneiders & Behrendt Bochum**
**Huestraße 23**
**44787 Bochum (DE)**

(56) Entgegenhaltungen:
CN-A- 103 206 090          DE-A1- 10 046 546
DE-A1- 10 240 180          DE-A1-102009 007 310
DE-A1-102014 007 071

**Beschreibung**

Die Erfindung betrifft einen Großmanipulator, eine Autobetonpumpe mit einem erfindungsgemäßen Großmanipulator sowie ein Verfahren zur Steuerung eines Großmanipulators.

Aus DE 10 2014 007 071 A1 ist ein Großmanipulator mit einem ausfaltbaren Knickmast bekannt, der einen um eine Hochachse drehbaren Drehschemel und eine Mehrzahl von Mastsegmenten aufweist, wobei die Mastsegmente an Knickgelenken jeweils um Knickachsen gegenüber einem benachbarten Mastsegment oder dem Drehschemel mittels je eines Antriebsaggregates begrenzt verschwenkbar sind, mit wenigstens einem Drehwinkelsensor zur Erfassung des Knickwinkels zwischen zwei benachbarten Mastsegmenten oder zwischen einem Mastsegment und dem benachbarten Drehschemel.

Um eine zumindest teilweise automatisierte Bedienung eines Großmanipulators zu ermöglichen, ist es je nach Aufgabenstellung erforderlich, die genaue Position der Mastsegmente zu kennen. Über die aus dem Stand der Technik bekannten Drehwinkelsensoren kann jedoch nur der Winkel zwischen den Mastsegmenten ermittelt werden. Insbesondere bei einer elastischen Durchbiegung der einzelnen Mastsegmente kann die genaue Position von der durch die Drehwinkelsensoren ermittelten Position abweichen. Eine Messung der Position der Mastsegmente durch direkte messtechnische Verfahren, wie zum Beispiel durch den Einsatz von Abstandssensoren, insbesondere Laser, Infrarot, Ultraschall, oder GPS, ist aufgrund der Umgebungsbedingungen auf der Baustelle und aus weiteren Gründen nur bedingt oder nur mit hohem Aufwand möglich und ist daher für den praktischen Einsatz ungeeignet. Sollen lediglich die Gelenkwinkelsensoren für die Messung herangezogen werden, ist es auch möglich, die elastische Verformung des Großmanipulators durch mathematische Modelle zu berechnen. Allerdings ist bei Großmanipulatoren die auftretende Belastung oft nur bedingt bekannt, beispielsweise aufgrund von in den Betonförderleitungen befindlichen Frischbetons bei Autobetonpumpen. Dies könnte durch die Messung der auftretenden Kräfte, wie zum Beispiel durch an den hydraulischen Antriebsaggregaten angebrachten Drucksensoren, in den mathematischen Modellen ebenfalls berücksichtigt werden. Nachteilig an der Lösung ist jedoch generell, dass die mathematischen Modelle für ausreichend präzise Ergebnisse sehr genau sein müssen, was einen hohen Entwicklungsaufwand bedeutet. Zudem ist zu berücksichtigen, dass der Fehler der auf Modellen basierenden Messung mit der Größe der Ausleger zunimmt und zu unbrauchbaren Ergebnissen führt, falls keine weiteren sensortechnischen Mittel eingesetzt werden.

Die DE 10 2009 007310 A1 betrifft einen Großmanipulator mit einem ausfaltbaren Knickmast, der einen um eine Hochachse drehbaren Drehschemel und eine Mehrzahl von Mastsegmenten aufweist, wobei die Mastsegmente an Knickgelenken jeweils um Knickachsen gegenüber einem benachbarten Mastsegment oder dem Drehschemel mittels je eines Antriebsaggregates verschwenkbar sind, mit Neigungssensoren zur Bestimmung von den einzelnen Mastsegmenten zugeordneten, erdfesten Winkelmesswerten. Nachteilig an der hier beschriebenen Lösung ist, dass üblicherweise auftretende Schwingungen des Großmanipulators am Knickmast die Ausgangssignale der Neigungssensoren verfälschen. Diese Verfälschung tritt auf, da die Neigungssensoren in der Regel auf der Basis der Erdbeschleunigung die Neigung ermitteln und die durch die Schwingung erzeugten Beschleunigungen des Neigungssensors das Messsignal beeinflussen.

Ein weiterer Nachteil der in DE 102 40 180 A1 vorgeschlagenen Lösung ist, dass nicht der exakte Gelenkwinkel erfasst wird, da jeweils nur ein Neigungssensor im Mastsegment verwendet wird. Insbesondere im unmittelbaren Bereich der Endanschläge führt dies im Zusammenhang mit einer kartesischen Steuerung der Mastspitze sowie einer aktiven Schwingungsdämpfung bei einer integrierten Gelenkwinkelregelung zu Schwierigkeiten, da diese Systeme auf die genaue Winkelposition angewiesen sind, um die Bewegung des Knickmastes exakt zu steuern. So sind bei nicht exakter Kenntnis der Winkelpositionen weitere Sonderbehandlungen in der Software im Bereich der Anschläge erforderlich, da bei nicht exakter Kenntnis der Winkelposition erhöhte Mindestabstände vorgesehen werden müssen, was die Effizienz des Systems einschränkt.

Die Verwendung von zwei Neigungssensoren in unmittelbarer Nähe zu den Mastenden, wie sie in CN 103 206 090 A vorgeschlagen wird, ermöglicht zwar eine genauere Kenntnis der Winkelposition, allerdings ist eine solche Sensorik aufgrund der hohen Anzahl der erforderlichen Neigungssensoren aufwendig und teuer.

Es ist daher Aufgabe der Erfindung, einen verbesserten Großmanipulator bereitzustellen, der sich einfach und sicher bedienen lässt und mit dem auf einfache Art und Weise gewährleistet ist, dass Rückschlüsse auf die genaue Position der einzelnen Mastsegmente möglich sind.

Gelöst wird diese Aufgabe durch einen Großmanipulator mit den Merkmalen des Anspruchs 1, durch eine Autobetonpumpe mit den Merkmalen des Anspruchs 7, sowie durch ein Verfahren gemäß Anspruch 8.

Erfindungsgemäß ist an dem letzten, die Mastspitze bildenden Mastsegment ein Neigungssensor angeordnet, und der Großmanipulator weist eine Steuereinheit auf, welche dazu eingerichtet ist, unter Einbeziehung der zwischen allen Mastsegmenten und dem Drehschemel erfassten Knickwinkel und der mittels des Neigungssensors erfassten Neigung des letzten Mastsegments die elastische Verformung des Knickmastes näherungsweise zu ermitteln. Unter elastischer Verformung des Knickmastes wird die Summe der elastischen Durchbiegungen aller Mastsegmente des Knickmastes verstanden. Dadurch lässt sich eine einfache und sichere Bedienung des Großmanipulators gewährleisten.

Vorteilhafte Ausgestaltungen und Weiterbildungen der Erfindung ergeben sich aus den abhängigen Ansprüchen.

Gemäß einer vorteilhaften Ausgestaltung der Erfindung ist vorgesehen, dass der Neigungssensor als geodätischer Winkelsensor ausgebildet ist. Dies hat den Vorteil, dass immer die genaue Neigung des letzten Mastsegments gegenüber der Richtung der Erdbeschleunigung bekannt ist. Damit arbeitet der Neigungssensor in einem wohl definierten Bezugssystem.

Eine vorteilhafte Ausgestaltung der Erfindung sieht vor, dass die Steuereinheit anhand der erfassten Knickwinkel und anhand der erfassten Neigung des letzten Mastsegments die Durchbiegung der einzelnen Mastsegmente in Form von Korrekturwinkeln näherungsweise berechnet. Auf diese Art und Weise kann mit nur einem zusätzlichen Neigungssensor und einer entsprechend eingerichteten Steuereinheit ein Rückschluss auf die Durchbiegung der Mastsegmente gezogen werden.

Weiter vorteilhaft ist, dass die Steuereinheit anhand der berechneten Durchbiegung der einzelnen Mastsegmente in Form der Korrekturwinkel korrigierte Knickwinkel berechnet. Dadurch kann auf einfache Art und Weise auf die Position der einzelnen Mastsegmente im Raum rückgeschlossen werden, indem die Kinematik des Auslegers vereinfacht als Starrkörperproblem aufgefasst wird, wobei als Knickwinkel zwischen den Mastsegmenten die um die berechnete Durchbiegung korrigierten Knickwinkel angenommen werden.

Besonders vorteilhaft ist, dass die Steuereinheit die rechnerisch korrigierten Knickwinkel zur Ansteuerung der Antriebsaggregate und/oder zur Überwachung der Verschwenkbewegung einzelner Mastsegmente zueinander verwendet. Mit der Berücksichtigung der rechnerisch korrigierten Knickwinkel bei der Ansteuerung der Antriebsaggregate und bei der Überwachung der Verschwenkbewegung einzelner Mastsegmente ist eine einfache Möglichkeit gegeben, komplexe Bewegungen mehrerer Mastsegmente gleichzeitig durch einfache Vorgaben des Benutzers beispielsweise im Rahmen einer Einhebelsteuerung zu ermöglichen. Aufgrund der rechnerisch korrigierten Knickwinkel kann die Steuereinheit die Position einzelner Mastsegmente im Raum abschätzen und Bewegungen der einzelnen Mastsegmente über die zugeordneten Antriebsaggregate präziser einleiten und steuern.

Vorteilhafterweise ist eine Steuereinheit zur Ansteuerung der Antriebsaggregate vorgesehen, wobei die Steuereinheit einen Fahrbefehl, der eine gewünschte Bewegung der Mastspitze des Knickmastes oder eines daran angebrachten Endschlauchs angibt, in Ansteuersignale für die Antriebsaggregate umsetzt. Wesentlich ist, dass dabei nur an dem letzten, die Mastspitze bildenden Mastsegment ein Neigungssensor angeordnet ist, wobei die Steuereinrichtung eingerichtet ist, den Fahrbefehl unter Einbeziehung der Knickwinkel und der mittels des Neigungssensors erfassten Neigung des letzten Mastsegments in die Ansteuersignale umzusetzen. Dies ist besonders vorteilhaft für die Realisierung einer kartesischen Steuerung der Mastspitze, das heißt einer sogenannten Einhebelsteuerung, geeignet. Für eine solche Einhebelsteuerung ist es zweckdienlich, die Lage der einzelnen Mastsegmente im Raum zu kennen. Insbesondere ist es von Vorteil, den radialen und vertikalen Abstand der Mastspitze zum Drehschemel erfassen zu können. Anhand der mittels Sensoren zu bestimmenden Stellung der einzelnen Mastsegmente werden von den in der Steuereinheit ablaufenden Algorithmen der kartesischen Steuerung jene Sollgeschwindigkeiten für die einzelnen Gelenke ermittelt, welche zur Realisierung der vom Benutzer gewünschten Sollbewegung der Mastspitze führen. Hierbei ist es erforderlich, dass die messtechnische Bestimmung der Stellung des Mastes möglichst genau ist, da es bei zu großen Messfehlern zu einer ungenauen Führung der Mastspitze kommen kann. Diesen Anforderungen genügt die Erfindung. Gleichzeitig lässt sich die Erfindung mit vergleichsweise geringem Aufwand bei einem vorhandenen Großmanipulator umsetzen.

Der erfindungsgemäße Großmanipulator wird bevorzugt zur Verteilung von Dickstoffen verwendet. Insbesondere dient er zur Förderung von Beton.

Ferner ist Gegenstand der Erfindung eine Autobetonpumpe. Die erfindungsgemäße Autobetonpumpe weist ein Fahrzeuggestell, eine am Fahrzeuggestell angeordnete Dickstoffpumpe, insbesondere Betonpumpe, und einen Großmanipulator mit der oben beschriebenen Steuerung und Sensorik auf.

Außerdem ist Gegenstand der Erfindung ein Verfahren zur Steuerung eines Großmanipulators mit der oben und nachfolgend beschriebenen Steuerung und Sensorik. Bei diesem Verfahren werden die Knickwinkel jeweils zwischen den benachbarten Mastsegmenten und zwischen dem ersten Mastsegment und dem benachbarten Drehschemel erfasst. Weiterhin wird die Neigung des letzten Mastsegments erfasst. Anschließend werden die Durchbiegungen der einzelnen Mastsegmente näherungsweise berechnet anhand der erfassten Knickwinkel und der erfassten Neigung. Hierdurch ist eine einfache Möglichkeit gegeben, Rückschlüsse auf die elastische Verformung des Knickmastes zu ziehen.

Vorteilhafterweise wird danach ein Fahrbefehl, der eine gewünschte Bewegung der Mastspitze des Knickmastes oder eines daran angebrachten Endschlauchs angibt, auf Basis der erfassten Knickwinkel und der näherungsweise berechneten Durchbiegungen der Mastsegmente in Ansteuersignale für die Antriebsaggregate umgesetzt. Mit diesem Verfahren ist eine einfache und sichere Möglichkeit gegeben, Fahrbefehle für die Mastspitze in Ansteuersignale für die einzelnen Antriebsaggregate umzusetzen.

Um die Präzision der Erfassung der Position der Mastsegmente zu erhöhen, ist es des Weiteren vorteilhaft, das vorgeschlagene Verfahren mit mathematischen Modellen des elastischen Auslegers zu kombinieren, indem das Ergebnis des mathematischen Modells mit der Messung der Neigung des letzten Mastsegments abgeglichen wird.

Zudem ist eine weitere Verbesserung der Güte der Messung möglich, wenn die am Großmanipulator auftretenden Kräfte, beispielsweise durch an den Zylindern angebrachte Drucksensoren, erfasst werden und in dem mathematischen Modell berücksichtigt werden.

Weitere Merkmale, Einzelheiten und Vorteile der Erfindung ergeben sich aus der nachfolgenden Beschreibung sowie anhand der Zeichnung. Ein Ausführungsbeispiel der Erfindung ist in der folgenden Zeichnung rein schematisch dargestellt und wird nachfolgend näher beschrieben. Es zeigt:

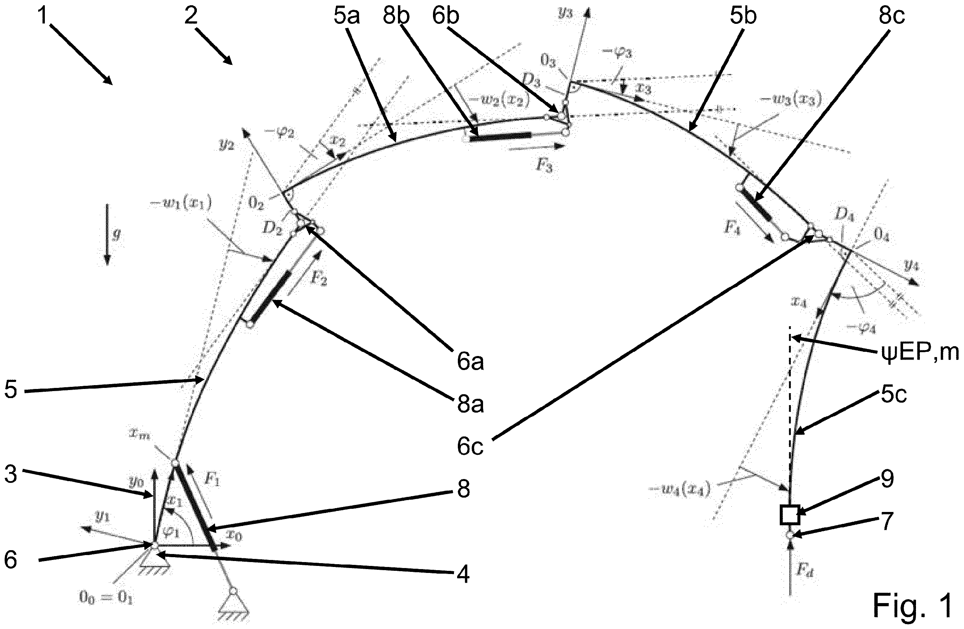

Figur 1:     einen erfindungsgemäßen Großmanipulator in schematischer Darstellung.

Die Figur 1 zeigt einen Großmanipulator 1 in schematischer Darstellung. Im Rahmen dieser Offenbarung wird unter dem Begriff Großmanipulator eine Arbeitseinrichtung wie zum Beispiel ein Arm, ein Ausleger, ein Hubwerk, ein Hubgerüst oder ein Mast verstanden. Der Großmanipulator 1 weist einen ausfaltbaren Knickmast 2 auf, der auf einem um eine Hochachse 3 drehbaren Drehschemel 4 angeordnet ist. Der Knickmast 2 weist eine Mehrzahl, im Ausführungsbeispiel insgesamt vier Mastsegmente 5, 5a, 5b, 5c auf, welche an Knickgelenken 6, 6a, 6b, 6c jeweils um Knickachsen gegenüber einem benachbarten Mastsegment 5, 5a, 5b, 5c oder dem Drehschemel 4 mittels je eines Antriebsaggregates 8, 8a, 8b, 8c verschwenkbar sind. Die Antriebsaggregate 8, 8a, 8b, 8c sind beispielsweise als Differential-Hydraulikzylinder ausgeführt, die über geeignete Hebelgetriebe die Mastsegmente 5, 5a, 5b, 5c begrenzt gegeneinander verschwenken. Die Mastsegmente 5, 5a, 5b, 5c können aber beispielsweise auch mittels eines Schneckenantriebes oder anderer geeigneter Drehantriebe gegeneinander, teilweise unbegrenzt gegeneinander verschwenkt werden. An den Knickgelenken 6, 6a, 6b, 6c sind Drehwinkelsensoren zur Erfassung des jeweiligen Knickwinkels $\varphi1$, $\varphi2$, $\varphi3$, $\varphi4$ des jeweiligen Knickgelenkes 6, 6a, 6b, 6c zwischen zwei benachbarten Mastsegmenten 5, 5a, 5b, 5c und zwischen dem ersten Mastsegment 5 und dem benachbarten Drehschemel 4 angeordnet. Die Knickwinkel $\varphi1$, $\varphi2$, $\varphi3$, $\varphi4$ können beispielsweise auch über an den Hebeln der Umlenkgetriebe angebrachte Drehwinkelsensoren oder beispielsweise an den Antriebsaggregaten 8, 8a, 8b, 8c angeordnete Längenmesssysteme indirekt ermittelt werden. Für die Erfindung ist wesentlich, dass die an den Knickgelenken 6, 6a, 6b, 6c erfassten Knickwinkel $\varphi1$, $\varphi2$, $\varphi3$, $\varphi4$ keinen Anteil enthalten, der sich aus der Durchbiegung der Mastsegmente ergibt.

Eine nicht dargestellte Steuereinheit ist zur Ansteuerung der Antriebsaggregate 8, 8a, 8b, 8c eingerichtet, wobei die Steuereinheit einen Fahrbefehl, der eine gewünschte Bewegung der Mastspitze 7 des Knickmastes oder eines daran angebrachten Endschlauchs angibt, in Steuersignale für die einzelnen Antriebsaggregate 8, 8a, 8b, 8c umsetzt. Hierzu befindet sich nur an dem letzten, die Mastspitze 7 bildenden Mastsegment 5c ein Neigungssensor 9, der vorzugsweise als geodätischer Winkelsensor ausgebildet ist und die Neigung des letzten Mastsegments 5c gegenüber der Richtung der Erdbeschleunigung bzw. Erde erfasst. Die Steuereinheit berechnet anhand der durch die Drehwinkelsensoren erfassten Knickwinkel $\varphi1$, $\varphi2$, $\varphi3$, $\varphi4$ und anhand der durch den Neigungssensor 9 erfassten Neigung $\psi_{EP,m}$ des letzten Mastsegments 5c die Durchbiegung w1, w2, w3, w4 der einzelnen Mastsegmente 5, 5a, 5b, 5c näherungsweise. Bei der Berechnung und Aufteilung der Durchbiegung w1, w2, w3, w4 auf die einzelnen Mastsegmente 5, 5a, 5b, 5c kann eine unterschiedliche Gewichtung für die einzelnen Mastsegmente 5, 5a, 5b, 5c, berücksichtigt werden. Diese Gewichtung kann abhängig von konstruktiven Gegebenheiten des Großmanipulators oder der einzelnen Mastsegmente vorgenommen werden. Außerdem kann bei der Berechnung und Aufteilung der Durchbiegung w1, w2, w3, w4 auf die einzelnen Mastsegmente 5, 5a, 5b, 5c eine potentielle Neigung der einzelnen Mastsegmente 5, 5a, 5b, 5c berücksichtigt werden.

In Figur 1 ist die Durchbiegung w1, w2, w3, w4 an den einzelnen Mastsegmenten 5, 5a, 5b, 5c angedeutet. Die Steuereinheit berechnet anhand der Durchbiegung w1, w2, w3, w4 der einzelnen Mastsegmente 5, 5a, 5b, 5c korrigierte Knickwinkel $\varphi1k$, $\varphi2k$, $\varphi3k$, $\varphi4k$. Diese korrigierten Knickwinkel $\varphi1k$, $\varphi2k$, $\varphi3k$, $\varphi4k$ werden von der Steuereinheit zur Ansteuerung der Antriebsaggregate aber auch zu Überwachung der Verschwenkbewegung der einzelnen Mastsegmente 5, 5a, 5b, 5c zueinander verwendet.

Im Folgenden wird ausführlich auf eine mögliche Ausgestaltung des erfindungsgemäßen Verfahrens zur Steuerung des oben beschriebenen Großmanipulators 1 eingegangen. Es wird vorgeschlagen, jeweils die Knickwinkel $\varphi1$, $\varphi2$, $\varphi3$, $\varphi4$ zwischen zwei benachbarten Mastsegmenten 5, 5a, 5b, 5c und zwischen einem Mastsegment 5 und dem benachbarten Drehschemel 4 zu erfassen. Außerdem wird die Neigung $\psi_{EP,m}$ des letzten Mastsegments 5c erfasst durch den an diesem Mastsegmente angeordneten Neigungssensor 9. Mit diesen Messdaten, also anhand der erfassten Knickwinkel $\varphi1$, $\varphi2$, $\varphi3$, $\varphi4$ und der erfassten Neigung $\psi_{EP,m}$ werden näherungsweise die Durchbiegungen w1, w2, w3, w4 der einzelnen Mastsegmente 5, 5a, 5b, 5c berechnet. Anschließend wird ein Fahrbefehl, der eine gewünschte Bewegung der Mastspitze 7 des Knickmast 2 oder eines daran angeordneten Endschlauchs angibt, auf Basis der erfassten Knickwinkel $\varphi1$, $\varphi2$, $\varphi3$, $\varphi4$ und der berechneten Durchbiegung w1, w2, w3, w4 in Steuersignale für die Antriebsaggregate 8, 8a, 8b, 8c umgesetzt.

Zur Umsetzung dieses Verfahrens wird die Kinematik des Großmanipulators als vereinfachtes Starrkörperproblem beschrieben. Der in Figur 1 schematisch dargestellte Knickmast 2 mit insgesamt vier Mastsegmenten 5, 5a, 5b, 5c ist aus Knickachsenrichtung gezeigt. Die Freiheitsgrade des Großmanipulators sind durch die Starrkörperwinkel bzw. die Knickwinkel $\varphi1$, $\varphi2$, $\varphi3$, $\varphi4$ sowie durch die elastische Durchbiegung w1, w2, w3, w4 der einzelnen Mastsegmente 5, 5a, 5b, 5c gegeben. Die Absolutbewegungen des Großmanipulators werden in einem Inertialkoordinatensystem $0_0 x_0 y_0$ beschrieben. Für jedes Mastsegment 5, 5a, 5b, 5c wird außerdem ein lokales Koordinatensystem $0_i x_i y_i$ (für i=1 zu Mastsegment 5, für i=2 zu Mastsegment 5a, für i=3 zu Mastsegment 5b, für i=4 zu Mastsegment 5c) festgelegt, dessen xi-Achse entlang der Symmetrieachse des unverformten Mastsegments verläuft. Da die Mastsegmente für $i \geq$ 2 am Beginn typischerweise einen Knick aufweisen, schneidet deren Symmetrieachse nicht die Achse der Knickgelenke 6, 6a, 6b, 6c. Der Ursprung der lokalen Koordinatensysteme $0_i x_i y_i$ wird daher auf den Schnittpunkt der Symmetrieachse mit jener orthogonalen Geraden gelegt, welche durch die Knickgelenkachse verläuft. Die Abstände zwischen den Knickgelenkachsen und den Ursprüngen der lokalen Koordinatensysteme $0_i x_i y_i$ werden als Abstand $D_i$ für $i = 2,...,N$ berücksichtigt. Die Längen der einzelnen Mastsegmente werden mit $L_i$ für $i = 2, ..., N$ bezeichnet.

Die kinematischen Beziehungen zwischen den lokalen Koordinatensystemen $0_i x_i y_i$ der einzelnen Mastsegmente 5, 5a, 5b, 5c und dem Inertialkoordinatensystem $0_0 x_0 y_0$ können mit Rotationsmatrizen und Translationsvektoren dargestellt werden. Bei einer vereinfachten Betrachtung des Großmanipulatorsystems als Starrkörperproblem kann für die elastischen Durchbiegungen $w_i(x_i) = 0$ für $i = 1, ...,N$ angenommen werden. Die Initialkoordinaten eines Punktes auf der Symmetrielinie eines Mastsegmente können für das $i$-te Mastsegmente mit einem Vektor $\mathbf{r}_i^i(x_i) = [x_i, 0]^T$, welcher die Koordinaten des Punktes im lokalen Koordinatensystem $0_i x_i y_i$ beschreibt, und mit dem Vektor der Knickwinkels $\varphi = [\varphi_1, ..., \varphi_N]^T$ gemäß der folgenden Formel

$$\mathbf{r}_0^i(x_i) = \mathbf{R}_0^i(\boldsymbol{\varphi})\mathbf{r}_i^i(x_i) + \mathbf{d}_0^i(\boldsymbol{\varphi})$$

dargestellt werden. Die Matrix $\mathbf{R}_0^i(\boldsymbol{\varphi})$ für j = 2, ..., N beschreibt hier die lokale Verdrehung des Koordinatensystems $0_i x_i y_i$ gegenüber dem Inertialkoordinatensystem $0_0 x_0 y_0$. Mit $\mathbf{d}_0^i(\boldsymbol{\varphi})$ ist der Anteil der translatorischen Verschiebung zwischen dem lokalen Koordinatensystem $0_i x_i y_i$ und dem Inertialkoordinatensystem $0_0 x_0 y_0$ beschrieben.

Mit den getroffenen Festlegungen der kinematischen Freiheitsgrade des Großmanipulatorsystems und unter der Verwendung der obigen Starrkörperbeschreibung ergibt sich eine berechnete Neigung $\psi_{EP,b}$ aus der Summe aller gemessenen Knickwinkel $\varphi_{i,m}$,

$$\psi_{EP,b} = \sum_{i=1}^{N} \varphi_{i,m}$$

Die Abweichung $\Delta \psi_{EP} = \psi_{EP,b} - \psi_{EP,m}$ zwischen der berechneten Neigung $\psi_{EP,b}$ und der tatsächlichen erfassten, d.h. durch den Neigungssensor 9 am letzten Mastsegment gemessenen, Neigung $\psi_{EP,m}$ muss in Form von Korrekturwerten $\Delta \varphi_i$, welche in direktem Zusammenhang zu den Durchbiegungen $w_i$ stehen, auf die einzelnen Knickgelenke 6, 6a, 6b, 6c aufgeteilt werden. Hierfür gilt

$$\Delta \psi_{EP} = \sum_{i=1}^{N} \Delta \varphi_i$$

Diese Aufgabenstellung lässt sich in Vektordarstellung als Optimierungsproblem der Form

$$\min_{\Delta \boldsymbol{\varphi}} \Delta \boldsymbol{\varphi}^T W \Delta \boldsymbol{\varphi}$$

mit $\Delta \varphi = [\Delta \varphi_1,...,\Delta \varphi_N]^T$ und der Nebenbedingung

$$\Delta \psi_{EP} = \mathbf{1}^{1 \times N} \Delta \boldsymbol{\varphi}$$

und der als Diagonalmatrix ausgeführten Gewichtungsmatrix

$$W = \begin{bmatrix} \dfrac{1}{\cos(\psi_{1,b})} & \cdots & 0 \\ \vdots & \ddots & \vdots \\ 0 & \cdots & \dfrac{1}{\cos(\psi_{N,b})} \end{bmatrix}$$

beschreiben.

Dabei bezeichnen $\psi_{i,b}$ für $i = 1,..., N$ die berechneten Neigungen der einzelnen Mastsegmente 5, 5a, 5b, 5c im Raum,

$$\psi_{i,b} = \sum_{j=1}^{i} \varphi_{j,m}$$

Die Lösung dieses quadratischen Optimierungsproblems mit linearer Gleichungsbedingung ergibt sich ohne eine detaillierte Erklärung zu

$$\Delta\varphi = \begin{bmatrix} \cos(\psi_{1,b}) \\ \vdots \\ \cos(\psi_{N,b}) \end{bmatrix} \left( \sum_{i=1}^{N} \cos(\psi_{i,b}) \right)^{-1} \Delta\psi_{EP}$$

Aufgrund der Gewichtungsmatrix mit Cosinus-Funktion kann sichergestellt werden, dass die Mastsegmente mit annähernd senkrechter Stellung in der Optimierungsaufgabe stark gewichtet werden und die Lösung für deren Korrekturwinkel gering ausfällt. Da in den Zählern der Brüche der Diagonalelemente in der Gewichtungsmatrix immer eine 1 steht, erfolgt eine gleichmäßige Aufteilung der Durchbiegungen auf alle Mastsegmente 5, 5a, 5b, 5c bei einem ausgestreckten Knickmast. Eine unterschiedliche Gewichtung anhand des Zählers je nach Mastsegment 5, 5a, 5b, 5c führt zusätzlich zu einer höheren Genauigkeit, wenn bei dieser unterschiedlichen Gewichtung konstruktive Merkmale des Knickmasts 2 bzw. der einzelnen Mastsegmente 5, 5a, 5b, 5c berücksichtigt werden.

Mit der Lösung $\Delta\varphi$ können die um die Durchbiegung korrigierten Ersatzgelenkwinkel $\varphi_k = [\varphi_{1,k},..., \varphi_{N,k}]^T$ durch

$$\varphi_{i,k} = \varphi_{i,m} - \Delta\varphi_i$$

berechnet werden. Die Umsetzung der Algorithmen der kartesischen Steuerung erfolgt dann mit den um die Durchbiegung korrigierten Winkeln $\varphi_{i,k}$. Die Koordinaten der Mastspitze 7 werden beispielsweise anhand von

$$\mathbf{r}_0^{EP} = \mathbf{R}_0^N(\boldsymbol{\varphi}_k)\mathbf{r}_N^N(L_N) + \mathbf{d}_0^N(\boldsymbol{\varphi}_k)$$

berechnet.

Die Präzision der Erfassung der Position der Mastsegmente 5, 5a, 5b, 5c kann weiter erhöht werden indem das vorgeschlagene Verfahren mit mathematischen Modellen des elastischen Auslegers kombiniert wird, indem das Ergebnis des mathematischen Modells mit der Messung der Neigung $\psi_{EP,m}$ des letzten Mastsegments 5c abgeglichen wird.

Eine weitere Verbesserung der Güte der Messung ist möglich, wenn die am Großmanipulator 1 auftretenden Kräfte, beispielsweise durch an den als Hydraulikzylindern ausgeführten Antriebsaggregaten 8, 8a, 8b, 8c angebrachte Drucksensoren erfasst werden, die den Hydraulikdruck in den Zylinderkammern erfassen und damit einen Anhaltspunkt für die Belastung des jeweiligen Mastsegmentes liefern und in dem mathematischen Modell berücksichtigt werden.

Bei den bisherigen Betrachtungen wurde davon ausgegangen, dass der Großmanipulator 1 absolut waagerecht aufgestellt ist. Dies ist aber nicht immer der Fall, denn zum Beispiel bei einem Großmanipulator in Form einer Autobetonpumpe ist eine Aufstellung mit bis zu 3 Grad seitlicher Neigung zur Waagerechten zulässig. Bei dem hier vorgestellten Berechnungsverfahren würde sich eine derartige Maschinenneigung zwar nur geringfügig auf die Ermittlung der Position der Mastsegmente 5, 5a, 5b, 5c auswirken aber eine weitere Verbesserung der Güte der Messung wäre durch die Einbeziehung eines Neigungssensors am Grundrahmen der Maschine oder am Drehschemel 4 möglich.

Die Steuereinheit oder auch Recheneinheit bestimmt die Korrekturwinkel $\Delta\varphi_1, \Delta\varphi_2, \Delta\varphi_3, \Delta\varphi_4$ anhand der Abweichung der mit dem Neigungssensor 9 erfassten Neigung $\psi_{EP,m}$ von einer mit einem mathematischen Modell berechneten Neigung $\psi_{EP,b}$ des letzten Mastsegments 5c. Als mathematisches Modell kann ein vereinfachtes Starrkörpermodell des Großmanipulator 1 verwendet werden. Alternativ kann ein elastisches Modell des Großmanipulators 1 als mathematisches Modell verwendet werden. Hierbei kann das elastische Modell mit der Messung von am Großmanipulator 1 auftretenden Kräften beaufschlagt werden. Zur Messung von am Großmanipulator 1 auftretenden Kräften werden Drucksensoren verwendet, welche die Drücke in den Kammern der als Differentialzylinder ausgeführten hydraulischen Antriebsaggregate 8, 8a, 8b, 8c erfassen. Die Steuereinheit ist dazu eingerichtet, einen Fahrbefehl in Ansteuersignale für die Antriebsaggregate 8, 8a, 8b, 8c in Abhängigkeit von den berechneten Korrekturwinkeln $\Delta\varphi_1, \Delta\varphi_2, \Delta\varphi_3, \Delta\varphi_4$ umzusetzen. Der Fahrbefehl gibt eine gewünschte Bewegung der Mastspitze 7 des Knickmastes 2 oder eines daran angebrachten Endschlauchs an, insbesondere in Richtung von kartesischen (oder Polar-) Koordinaten.

Bezugszeichenliste

| | |
|---|---|
| 1 | Großmanipulator |
| 2 | Knickmast |
| 3 | Hochachse (yo) |
| 4 | Drehschemel |
| 5 5a, 5b, 5c | Mastsegmente |
| 6 6a, 6b, 6c | Knickgelenke |
| 7 | Mastspitze |
| 8 8a, 8b, 8c | Antriebsaggregate |
| 9 | Neigungssensor |

**Patentansprüche**

1. Großmanipulator (1) mit einem ausfaltbaren Knickmast (2), der einen um eine Hochachse (3) drehbaren Drehschemel (4) und eine Mehrzahl von Mastsegmenten (5, 5a, 5b, 5c) aufweist, wobei die Mastsegmente (5, 5a, 5b, 5c) an Knickgelenken (6, 6a, 6b, 6c) jeweils um Knickachsen gegenüber einem benachbarten Mastsegment (5, 5a, 5b, 5c) oder dem Drehschemel (4) mittels je eines Antriebsaggregates (8, 8a, 8b, 8c) verschwenkbar sind, und mit einem an dem letzten, die Mastspitze (7) bildenden Mastsegment (5c) angeordneten Neigungssensor (9),

   **gekennzeichnet durch**, Drehwinkelsensoren zur Erfassung der Knickwinkel ($\varphi1, \varphi2, \varphi3, \varphi4$) zwischen den benachbarten Mastsegmenten (5,5a,5b,5c) und zwischen dem ersten Mastsegment (5) und dem benachbarten Drehschemel (4),
   und einer Steuereinheit, welche dazu eingerichtet ist, unter Einbeziehung der erfassten Knickwinkel ($\varphi_1, \varphi_2, \varphi_3, \varphi_4$) und der mittels des Neigungssensors (9) erfassten Neigung ($\psi_{EP,m}$) des letzten Mastsegments (5c) eine elastische Verformung des Knickmasts (2) näherungsweise zu ermitteln.

2. Großmanipulator (1) nach Anspruch 1, **dadurch gekennzeichnet, dass** der Neigungssensor (9) als geodätischer Winkelsensor ausgebildet ist.

3. Großmanipulator (1) nach Anspruch 1 oder 2, **dadurch gekennzeichnet, dass** die Steuereinheit anhand der erfassten Knickwinkel ($\varphi_1, \varphi_2, \varphi_3, \varphi_4$) und anhand der erfassten Neigung ($\psi_{EP,m}$) des letzten Mastsegments (5c) die Durchbiegung ($w_1, w_2, w_3, w_4$) der einzelnen Mastsegmente (5, 5a, 5b, 5c) in Form von Korrekturwinkeln ($\Delta\varphi_1, \Delta\varphi_2, \Delta\varphi_3, \Delta\varphi_4$) näherungsweise berechnet.

4. Großmanipulator (1) nach Anspruch 3, **dadurch gekennzeichnet, dass** die Steuereinheit anhand der berechneten Durchbiegung der einzelnen Mastsegmente (5, 5a, 5b, 5c) in Form der Korrekturwinkel ($\Delta\varphi_1, \Delta\varphi_2, \Delta\varphi_4$) korrigierte Knickwinkel ($\varphi_{1k}, \varphi_{2k}, \varphi_{3k}, \varphi_{4k}$) berechnet.

5. Großmanipulator (1) nach Anspruch 4, **dadurch gekennzeichnet, dass** die Steuereinheit die rechnerisch korrigier-

# EP 3 439 834 B1

ten Knickwinkel ($\varphi_{1k}$, $\varphi_{2k}$, $\varphi_{3k}$, $\varphi_{4k}$) zur Ansteuerung der Antriebsaggregate (8, 8a, 8b, 8c) und/oder zur Überwachung der Verschwenkbewegung einzelner Mastsegmente (5, 5a, 5b, 5c) zueinander verwendet.

6. Großmanipulator (1) nach einem der Ansprüche 1 bis 5, **dadurch gekennzeichnet, dass** die Steuereinheit zur Ansteuerung der Antriebsaggregate (8, 8a, 8b, 8c) eingerichtet ist, wobei die Steuereinheit einen Fahrbefehl, der eine gewünschte Bewegung der Mastspitze (7) des Knickmastes (2) oder eines daran angebrachten Endschlauchs angibt, in Ansteuersignale für die Antriebsaggregate (8, 8a, 8b, 8c) umsetzt, wobei die Steuereinheit eingerichtet ist, den Fahrbefehl unter Einbeziehung wenigstens eines Knickwinkels ($\varphi_1$, $\varphi_2$, $\varphi_3$, $\varphi_4$) und der mittels des Neigungssensors (9) erfassten Neigung ($\psi_{EP,m}$) des letzten Mastsegments (5c) in die Ansteuersignale umzusetzen.

7. Autobetonpumpe aufweisend ein Fahrzeuggestell, eine am Fahrzeuggestell angeordnete Dickstoffpumpe, insbesondere Betonpumpe, und einen Großmanipulator (1) nach einem der vorangehenden Ansprüche.

8. Verfahren zur Steuerung eines Großmanipulators (1) nach einem der Ansprüche 1 bis 6, bei welchem

a) die Knickwinkel ($\varphi_1$, $\varphi_2$, $\varphi_3$, $\varphi_4$) jeweils zwischen zwei benachbarten Mastsegmenten (5, 5a, 5b, 5c) und zwischen dem ersten Mastsegment (5) und dem benachbarten Drehschemel (4) erfasst werden;
b) die Neigung ($\psi_{EP,m}$) des letzten Mastsegments (5c) erfasst wird;
c) die Durchbiegungen ($w_1$, $w_2$, $w_3$, $w_4$) der einzelnen Mastsegmente (5, 5a 5b, 5c) näherungsweise anhand der erfassten Knickwinkel ($\varphi_1$, $\varphi_2$, $\varphi_3$, $\varphi_4$) und der erfassten Neigung ($\psi_{EP,m}$) berechnet werden.

9. Verfahren nach Anspruch 8, **dadurch gekennzeichnet, dass** d) ein Fahrbefehl, der eine gewünschte Bewegung der Mastspitze (7) des Knickmastes (2) oder eines daran angebrachten Endschlauchs angibt, auf Basis der erfassten Knickwinkel ($\varphi_1$, $\varphi_2$, $\varphi_3$, $\varphi_4$) und der näherungsweise berechneten Durchbiegungen der Mastsegmente (5, 5a, 5b, 5c) in Ansteuersignale für die Antriebsaggregate (8, 8a, 8b, 8c) umgesetzt wird.

**Claims**

1. Large manipulator (1) comprising an extendable folding boom (2), which comprises a turntable (4) that is rotatable about a vertical axis (3) and a plurality of boom segments (5, 5a, 5b, 5c), wherein the boom segments (5, 5a, 5b, 5c) are pivotable at folding joints (6, 6a, 6b, 6c), in each case about folding axes in relation to an adjacent boom segment (5, 5a, 5b, 5c) or the turntable (4), by means of a respective drive assembly (8, 8a, 8b, 8c), and comprising an inclination sensor (9) arranged at the last boom segment (5c), which forms the boom tip (7),

**characterized by**
rotary angle sensors for detecting the folding angles ($\varphi_1$, $\varphi2$, $\varphi_3$, $\varphi_4$) between the adjacent boom segments (5, 5a, 5b, 5c) and between the first boom segment (5) and the adjacent turntable (4),
and a control unit that is configured to approximately establish an elastic deformation of the folding boom (2) taking account of the detected folding angles ($\varphi_1$, $\varphi_2$, $\varphi_3$, $\varphi_4$) and the inclination ($\psi_{EP,m}$) of the last boom segment (5c) that was detected by means of the inclination sensor (9).

2. Large manipulator (1) as claimed in claim 1, **characterized in that** the inclination sensor (9) is embodied as an angle sensor for surveying.

3. Large manipulator (1) as claimed in claim 1 or 2, **characterized in that** the control unit calculates the sag ($w_1$, $w_2$, $w_3$, $w_4$) of the individual boom segments (5, 5a, 5b, 5c) in approximate fashion in the form of correction angles ($\Delta\varphi_1$, $\Delta\varphi_2$, $\Delta\varphi_3$, $\Delta\varphi_4$) on the basis of the detected folding angles ($\varphi_1$, $\varphi_2$, $\varphi_3$, $\varphi_4$) and on the basis of the detected inclination ($\psi_{EP,m}$) of the last boom segment (5c).

4. Large manipulator (1) as claimed in claim 3, **characterized in that** the control unit calculates corrected folding angles ($\varphi_{1k}$, $\varphi_{2k}$, $\varphi_{3k}$, $\varphi_{4k}$) on the basis of the calculated sag of the individual boom segments (5, 5a, 5b, 5c) in the form of the correction angles ($\Delta\varphi_1$, $\Delta\varphi_2$, $\Delta\varphi_3$, $\Delta\varphi_4$).

5. Large manipulator (1) as claimed in claim 4, **characterized in that** the control unit uses the folding angles ($\varphi_{1k}$, $\varphi_{2k}$, $\varphi3k$, $\varphi_{4k}$) that were corrected by calculation for the purposes of actuating the drive assemblies (8, 8a, 8b, 8c) and/or for the purposes of monitoring the pivoting movement of individual boom segments (5, 5a, 5b, 5c) in relation to one another.

6. Large manipulator (1) as claimed in any one of claims 1 to 5, **characterized in that** the control unit is configured to actuate the drive assemblies (8, 8a, 8b, 8c), wherein the control unit converts a drive command, which specifies a desired movement of the boom tip (7) of the folding boom (2) or of an end hose connected thereto, into actuation signals for the drive assemblies (8, 8a, 8b, 8c), wherein the control unit is configured to convert the drive command into the actuation signals taking account of at least one folding angle ($\varphi_1$, $\varphi_2$, $\varphi_3$, $\varphi_4$) and the inclination ($\psi_{EP,m}$) of the last boom segment (5c) detected by means of the inclination sensor (9).

7. Truck-mounted concrete pump, comprising a vehicle chassis, a thick matter pump, in particular a concrete pump, arranged at the vehicle chassis, and a large manipulator (1) as claimed in any one of the preceding claims.

8. Method for controlling a large manipulator (1) as claimed in any one of claims 1 to 6, in which

   a) the folding angles ($\varphi_1$, $\varphi_2$, $\varphi_3$, $\varphi_4$) respectively between two adjacent boom segments (5, 5a, 5b, 5c) and between the first boom segment (5) and the adjacent turntable (4) are detected;
   b) the inclination ($\psi_{EP,m}$) of the last boom segment (5c) is detected;
   c) the sag ($w_1$, $w_2$, $w_3$, $w_4$) of the individual boom segments (5, 5a, 5b, 5c) is calculated in approximate fashion on the basis of the detected folding angles ($\varphi_1$, $\varphi_2$, $\varphi_3$, $\varphi_4$) and the detected inclination ($\psi_{EP,m}$).

9. Method as claimed in claim 8, **characterized in that**
   d) a drive command, which specifies a desired movement of the boom tip (7) of the folding boom (2) or of an end hose attached thereto, is converted into actuation signals for the drive assemblies (8, 8a, 8b, 8c) on the basis of the detected folding angles ($\varphi_1$, $\psi_2$, $\psi_3$, $\varphi_4$) and the sag of the boom segments (5, 5a, 5b, 5c) calculated in approximate fashion.

**Revendications**

1. Manipulateur de grande taille (1) avec un mât articulé (2) repliable, qui présente une selle orientable (4) pouvant tourner autour d'un axe vertical (3) et une multitude de segments de mât (5, 5a, 5b, 5c), dans lequel les segments de mât (5, 5a, 5b, 5c) peuvent pivoter sur des articulations (6, 6a, 6b, 6c), respectivement autour d'axes d'articulation, par rapport à un segment de mât (5, 5a, 5b, 5c) adjacent ou à la selle orientable (4), au moyen de respectivement un groupe d'entraînement (8, 8a, 8b ,8c), et avec un capteur d'inclinaison (9) disposé sur le dernier segment de mât (5c) formant la pointe de mât (7),

   **caractérisé par**
   des capteurs d'angle de rotation pour détecter les angles d'articulation ($\varphi1$, $\varphi2$, $\varphi3$, $\varphi4$) entre les segments de mât (5, 5a, 5b, 5c) adjacents et entre le premier segment de mât (5) et la selle orientable (4) adjacente, et une unité de commande, laquelle est mise au point pour déterminer approximativement, en intégrant les angles d'articulation ($\varphi1$, $\varphi2$, $\varphi3$, $\varphi4$) détectés et l'inclinaison ($\psi EP,m$) détectée au moyen du capteur d'inclinaison (9) du dernier segment de mât (5c), une déformation élastique du mât d'articulation (2).

2. Manipulateur de grande taille (1) selon la revendication 1, **caractérisé en ce que** le capteur d'inclinaison (9) est réalisé en tant que capteur d'angle géodésique.

3. Manipulateur de grande taille (1) selon la revendication 1 ou 2, **caractérisé en ce que** l'unité de commande calcule approximativement, à l'aide des angles d'articulation ($\varphi1$, $\varphi2$, $\varphi3$, $\varphi4$) détectés et à l'aide de l'inclinaison ($\psi EP,m$) détectée du dernier segment de mât (5c), la flexion ($w1$, $w2$, $w3$, $w4$) des divers segments de mât (5, 5a, 5b, 5c) sous la forme d'angles de correction ($\Delta\varphi_1$, $\Delta\varphi2$, $\Delta\varphi3$, $\Delta\varphi4$).

4. Manipulateur de grande taille (1) selon la revendication 3, **caractérisé en ce que** l'unité de commande calcule à l'aide de la flexion calculée des divers segments de mât (5, 5a, 5b, 5c) des angles d'articulation corrigés ($\varphi1k$, $\varphi2$, $\varphi3k$, $\varphi4k$) sous la forme des angles de correction ($\Delta\varphi1$, $\Delta\varphi2$, $\Delta\varphi3$, $\Delta\varphi4$).

5. Manipulateur de grande taille (1) selon la revendication 4, **caractérisé en ce que** l'unité de commande utilise les angles d'articulation corrigés ($\varphi1k$, $\varphi2$, $\varphi3k$, $\varphi4k$) par calcul pour piloter les groupes d'entraînement (8, 8a, 8b, 8c) et/ou pour surveiller le déplacement par pivotement de divers segments de mât (5, 5a, 5b, 5c) les uns par rapport aux autres.

**6.** Manipulateur de grande taille (1) selon l'une quelconque des revendications 1 à 5, **caractérisé en ce que** l'unité de commande est mise au point pour piloter les groupes d'entraînement (8, 8a, 8b, 8c), dans lequel l'unité de commande convertit un ordre de déplacement, qui indique un déplacement souhaité de la pointe de mât (7) du mât articulé (2) ou d'un tuyau flexible d'extrémité installé sur celle-ci, en signaux de pilotage pour les groupes d'entraînement (8, 8a, 8b, 8c), dans lequel l'unité de commande est mise au point pour convertir l'ordre de déplacement en intégrant au moins un angle d'articulation ($\varphi$1, $\varphi$2, $\varphi$3, $\varphi$4) et l'inclinaison ($\psi$EP,m), détectée au moyen du capteur d'inclinaison (9), du dernier segment de mât (5c) en les signaux de pilotage.

**7.** Pompe à béton automatique présentant un châssis de véhicule, une pompe à matières épaisses disposée sur le châssis de véhicule, en particulier une pompe à béton, et un manipulateur de grande taille (1) selon l'une quelconque des revendications précédentes.

**8.** Procédé de commande d'un manipulateur de grande taille (1) selon l'une quelconque des revendications 1 à 6, où

a) les angles d'articulation ($\varphi$1, $\varphi$2, $\varphi$3, $\varphi$4) sont détectés respectivement entre deux segments de mât (5, 5a, 5b, 5c) adjacents et entre le premier segment de mât (5) et la selle orientable (4) adjacente ;
b) l'inclinaison ($\psi$EP,m) du dernier segment de mât (5c) est détectée ;
c) les flexions (w1, w2, w3, w4) des divers segments de mât (5, 5a, 5b, 5c) sont calculées approximativement à l'aide des angles d'articulation ($\varphi$1, $\varphi$2, $\varphi$3, $\varphi$4) détectés et de l'inclinaison ($\psi$EP,m) détectée.

**9.** Procédé selon la revendication 8, **caractérisé en ce que**
d) un ordre de déplacement, qui indique un déplacement souhaité de la pointe de mât (7) du mât articulé (2) ou d'un tuyau flexible d'extrémité installé sur celle-ci, est converti, sur la base des angles d'articulation ($\varphi$1, $\varphi$2, $\varphi$3, $\varphi$4) détectés et des flexions, calculées approximativement, des segments de mât (5, 5a, 5b, 5c) en signaux de pilotage pour les groupes d'entraînement (8, 8a, 8b, 8c).

Fig. 1

**IN DER BESCHREIBUNG AUFGEFÜHRTE DOKUMENTE**

**In der Beschreibung aufgeführte Patentdokumente**

- DE 102014007071 A1
- DE 102009007310 A1
- DE 10240180 A1
- CN 103206090 A